# EUROPÄISCHE PATENTSCHRIFT

(11) **EP 2 384 263 B1**
(45) Veröffentlichungstag und Bekanntmachung des Hinweises auf die Patenterteilung: **22.08.2012**
(21) Anmeldenummer: 10706490.9
(22) Anmeldetag: 27.01.2010
(51) Int. Cl.: B25J 9/00, B25J 17/02, B25J 18/00

(54) **DELTAROBOTER FÜR ERHÖHTE ANFORDERUNGEN AN DYNAMIK, HYGIENE UND KOLLISIONSFOLGENSCHUTZ**
DELTA ROBOT FOR INCREASED DYNAMIC, HYGIENE AND COLLISION PROTECTION REQUIREMENTS
ROBOT DELTA POUR EXIGENCES ACCRUES EN MATIÈRE DE DYNAMIQUE, D'HYGIÈNE ET DE PROTECTION CONTRE LES CONSÉQUENCES D'UNE COLLISION

(30) Priorität: 30.01.2009 DE 102009006833
(43) Veröffentlichungstag der Anmeldung: 09.11.2011
(73) Patentinhaber: Elau GmbH, 97828 Marktheidenfeld (DE)
(72) Erfinder: BUNSENDAL, Jens, 97070 Würzburg (DE); HOMBACH, Christian, 97261 Güntersleben (DE)
(74) Vertreter: Pöhner, Wilfried Anton
(86) Internationale Anmeldenummer: PCT/DE2010/000089
(87) Internationale Veröffentlichungsnummer: WO 2010/085943

(56) Entgegenhaltungen:
- EP-A1- 0 937 551
- DE-U1-202005 017 588
- FR-B1- 2 856 948
- US-A- 5 333 514
- US-A- 5 692 412
- US-A1- 2006 213 308
- US-B1- 6 577 093

## Beschreibung

Die Erfindung bezieht sich auf einen Deltaroboter, bestehend aus einem ortsfesten Gehäuse, in dem wenigstens drei Antriebe eingebaut sind und an dem wenigstens drei längliche Oberarme jeweils um eine Achse verschwenkbar angelenkt sind und mit je einem der Antriebe verbunden sind und an ihrem freien Ende mit je einem Paar länglicher und zueinander parallelen Unterarme über je ein Kugelgelenk verbunden sind, die an ihrem anderen Ende jeweils über ein weiteres Kugelgelenk mit einer bewegbaren Parallelplatte verbunden sind, wobei an beiden Enden jedes Unterarmes ein Kugelkopf oder eine Kugelpfanne als Teil eines Kugelgelenks befestigt ist

Ein solcher Deltaroboter ist in der US-B-6577093 offenbart.

Auf aktuellem Stand der Technik haben sich Deltaroboter insbesondere für das hochdynamische Handling von relativ leichgewichtigen Gegenständen - wie z.B. dem Verpacken von Nahrungsmitteln in kleinen Mengen oder Arzneimitteln - bewährt, da sie eine extrem hohe Dynamik von bis zu drei Verpackungsvorgängen pro Sekunde ermöglichen.

Die ersten Deltaroboter wiesen drei Oberarme auf. Es sind jedoch auch Varianten mit vier und mehr Oberarmen bekannt.

In jedem Fall sind an der Grundplatte oder am Gehäuse also drei und mitunter auch vier längliche Oberarme um je eine Achse verschwenkbar gelagert. An deren freien Enden sind wiederum jeweils zwei zueinander parallele Stangen angelenkt, die wiederum gelenkig mit der Parallelplatte verbunden sind. Durch Verschwenken der Servoantriebe kann die Parallelplatte in jede beliebige Position des vorgesehenen Arbeitsraumes manövriert werden. Weil die Unterarme aus zwei parallelen Stangen bestehen, bewegt sich die Parallelplatte - wie ihr Name sagt - stets parallel zur Grundplatte.

Die meisten Deltaroboter bestehen auf aktuellem Stand der Technik aus einer Grundplatte, auf der drei Servoantriebe montiert sind. Die Grundplatte wird für Anwendungen in hygienisch kritischen Bereichen wie der Produktion von Lebensmitteln, Arzneimitteln oder elektronischen Bauelementen zu einem Gehäuse erweitert, damit Schmierstoffe und eventueller Abrieb der Antriebe und/oder des Getriebes sich nicht lösen und in das Produkt fallen können.

Auf aktuellem Stand der Technik nennt die US-B-6,577,093, Hvittfeldt, einen Deltaroboter für hygienische Anforderungen, bei dem alle Antriebe innerhalb eines Gehäuses angeordnet sind. Dadurch wird vermieden, dass Schmierstoffe oder Abrieb aus den Lagern des Motors und des Getriebes nach außen gelangen und damit eine ansonsten hygienische Umgebung kontaminieren. Ein weiterer, sehr wesentlicher Vorteil ist, dass das Gehäuse auch aus einem Material gefertigt werden kann, dass den sehr scharfen Reinigungsmitteln für Gerätschaften bei der Nahrungsmittelverarbeitung standhalten kann.

Die US-B-6,577,093 gibt jedoch nachteiliger Weise keinen Hinweise darauf, wie sichergestellt wird, dass die Bereiche des Roboters außerhalb des Gehäuses, also die Arme und die Gelenke des Roboters, im Betrieb und bei möglichen Kollisionen keine Verunreinigungen abgeben.

Ebenso fehlen Hinweise darauf, wie die Arme und die Gelenke an die Forderung nach höchster Dynamik angepasst werden können. Bekanntlich ist eine hohe erzielbare Taktzahl stets der Grund warum das Prinzip eines Deltaroboters überhaupt gewählt wird. Für langsame Bewegungen sind z.B. simple Linearhandlings mitunter besser geeignet. Die Forderung nach hoher Dynamik ist also mit der Wahl eines Deltaroboters bereits impliziert.

Trotz der Aufgabenstellung, hygienischen Anforderungen zu genügen, also auch den Einwirkungen schärfster Reinigungsmittel zu trotzen, fehlen entsprechende Vorschläge. Auf die Folgen einer Kollision wird ebenfalls nicht eingegangen.

Es ist jedoch ohne weiteres klar, dass für Roboter von höchster Dynamik generell Elemente mit möglichst geringem Gewicht zu bevorzugen sind, und zwar insbesondere je größer ihr effektiver Bewegungsradius ist, da ja bekanntlich das Eigenträgheitsmoment einer jeden Masse bei Bewegung um einen Kreismittelpunkt mit der vierten Potenz des Radius zunimmt.

Aus diesem Gesichtspunkt wären die filigranen und daher leichtgewichtigen Kreuz- oder Kardangelenke zur Verbindung der Arme und der Parallelplatte eines Deltaroboters prinzipiell interessant. Die damit maximal erreichbaren Verschwenkungswinkel sind jedoch im Vergleich zu einem Kugelgelenk, bestehend aus einem Kugelkopf und einer darauf gleitenden, komplementären Kugelpfanne, spürbar kleiner. Weil Kugelgelenke also einen größeren Verschwenkungswinkel und damit einen größeren Arbeitsraum ermöglichen, sind sie heute die für Deltaroboter am meisten genutzte Gelenkausführung.

Auf aktuellem Stand der Technik zeigt die Patentochraft US 5,333,514, Toyama, einen Deltaroboter, dessen Arme und dessen Parallelplatte durch Kugelgelenke miteinander verbunden sind.

Ein Vorzug für hygienisch kritische Anwendungen ist, dass die Kugelpfanne eine relativ sehr kleine Oberfläche aufweist. Sobald sich kleinste Verunreinigungen beginnen darauf abzulagern, so werden sie alsbald durch den darin gleitenden Kugelkopf wieder heraus befördert und sind auf dessen glatter Oberfläche einfach und effizient bei jeder regelmäßigen Reinigung wieder zu entfernen.

Als ein hygienischer Nachteil ist in der Figur 5 der Patentschrift US 5,333,514 erkennbar, dass die rohrförmigen Unterarme an ihren Stirnseiten offen sind. Durch diese Öffnungen können Verunreinigungen in den Innenraum der Rohre eindringen und sich dort festsetzen. Und weil sie dort gegen das Einwirken von Reinigungsmitteln relativ gut geschützt sind, lösen Sie sich mitunter erst dann, wenn der Unterarm einer hohen Beschleunigung, wie z.B. einer ansonsten geringfügigen Kollision, ausgesetzt wird.

Dann kann sich die Schmutzschicht teilweise, z.B. in Bruchstücken, oder vollständig aus dem Unterarm lösen und auf oder in die vom Deltaroboter zu hantierenden Produkte oder Gegenstände fallen. Wenn es sich dabei um ein zu verpackendes oder abzufüllendes Lebensmittel handelt, können diesbezügliche Lebensmittelvorschriften schon bei ansonsten geringfügigen Kollisionen die Vernichtung ganzer Chargen erfordern.

Als ein weiterer, gewichtiger Nachteil ist in der Figur 5 der Patentschrift US 5,333,514 erkennbar, dass die rohrförmigen Unterarme in komplementäre Rohrstücke eingesteckt sind, die an die Kugelpfannen angeformt sind. Durch diese Rohrstücke wird das Gewicht des gesamten Unterarmes spürbar erhöht; ohne einen entsprechenden Zugewinn an Belastbarkeit gegen Druck- und Zugbelastungen zu erreichen.

Für Delta-Roboter mit höchsten Anforderungen an die Dynamik ist insbesondere für die Unterarme auf aktuellem Stand der Technik der bevorzugte Werkstoff ein kohlenfaserverstärkter Kunststoff. Er wird auch als CFK bezeichnet, wobei das C für Carbon oder Kohlenstoff steht. Bei diesem Faser-Kunststoff-Verbundwerkstoff werden Kohlenstofffasern - meist in mehreren Lagen - als Verstärkung in eine Kunststoffmatrix aus Duromeren, zum Beispiel Epoxidharz, oder aus Thermoplasten eingebettet.

CFK-Bauteile können je nach Auslegung wesentlich leichter sein als Bauteile aus Aluminium oder Stahl: Einer Dichte von etwa 1,5 g/cm³ eines typischen CFK-Werkstoffes steht eine Dichte von etwa 2,7 g/cm³ bei Aluminium und rund 7,8 g/cm³ von Stahl und Eisen gegenüber. Ein typischer Grenzwert für die Zugfestigkeit ist bei CFK 1500 N/mm², bei Aluminium-Legierungen rund 500 N/mm² und bei Baustahl rund 1000 N/mm². Daraus ergibt sich ein Quotient der beiden Werte - also Zugfestigkeit in Abhängigkeit von der spezifischen Dichte - für CFK von 1000, für Aluminium von etwa 185 und für Stahl von nur rund 128.

Aufgrund dieser deutlichen Überlegenheit von CFK überrascht es nicht, dass CFK nach aktuellem Stand der Technik der bevorzugte Werkstoff für die Unterarme von Deltarobotern ist. Dynamische Deltaroboter mit stählernen Unterarmen sind bisher nicht bekannt.

Ein kritischer Nachteil von Bauteilen aus CFK ist, dass sie sich bei Überlastung praktisch überhaupt nicht deformieren, sondern zersplittern. Dabei entstehen scharfe Bruchkanten, die zu Verletzungen beim Wartungspersonal oder zu Beschädigungen führen können.

Ein weiterer Nachteil von CFK entsteht durch die Einwirkung von Reinigungsmitteln, insbesondere mit hohem Säureanteil, auf den Kunststoff, der die Carbonfasern verbindet. Der Kunststoff kann dadurch verspröden, so dass kleine Partikel ausbrechen und die Carbonfaser bei der nächsten Reinigung ungeschützt den Reinigungsmitteln ausgesetzt ist. Dadurch können auch in tiefer liegenden Schichten von außen nicht sichtbare Beschädigungen zur Abspaltung von Carbonpartikeln führen. Deren Beimischung zu Lebensmitteln kann negative Folgen beim menschlichen Verzehr nach sich ziehen.

Auch in anderen Anwendungen wie zum Beispiel bei der Herstellung von Wafern für elektronische Halbleiter können die Carbonfasern Ausschuss und damit eine schlechte Wirtschaftlichkeit verursachen.

Als Werkstoff, der den Reinigungsmitteln in hygienisch kritischen Anwendungsfällen am besten widersteht, ist im Maschinenbau Edelstahl bekannt. Je nach dem Anteil von Kohlenstoff und anderen Legierungsbestandteilen kann er sogar sehr aggressiven Reinigern widerstehen und dabei auch eine hohe Festigkeit aufbringen.

Als Stand der Technik wird in der DE-U-20 2005 017 588 im Unteranspruch 10 auch eine Oberfläche aus Edelstahl für einen Roboterarm in einem Reinraum genannt. Der Nachteil dieses Vorschlags ist jedoch, dass zur Abdichtung von Hohlräumen im Roboterarm eine Dichtung aus einem anderen Werkstoff vorgeschlagen wird; genannt werden z. B. Elastomere wie Ethylen-Propylen-Kautschuk oder PTFE (Poly Tetra Fluor Ethylen). Diese Dichtungen können sehr wirkungsvollen und daher aggressiven Reinigungsmitteln nur über eine begrenzte Zeit hinweg Stand halten und müssen dann ausgetauscht werden. Je "schärfer" das Reinigungsmittel ist, desto früher kann die Dichtung beschädigt werden. Dadurch können Keime in den Innenraum eindringen und sich dort vermehren. Im weiteren Verlauf - z.B. beim Eindringen und Austreten von Wasser - können die Keime zusammen mit dem Wasser wieder austreten und zu einer Kontamination führen.

Dieser Effekt tritt bei Baugruppen eines Roboters in der Nähe der zu bewegenden Produkte verstärkt auf, weil diese Teile weitaus intensiver, also auch weitaus öfter gereinigt werden als produktferne Baugruppen.

Auf diesem Hintergrund hat sich die Erfindung die Aufgabe gestellt, einen Deltaroboter zu entwickeln, der erhöhten Anforderungen an Dynamik, Hygiene und den Schutz vor Folgen einer Kollision genügen kann, wobei das Gewicht der auf dem größten Radius bewegten Bestandteile, insbesondere der Unterarme minimiert werden soll und die Empfindlichkeit der Roboterbestandteile, insbesondere der Unterarme gegen aggressive Reinigungsmittel, so hoch wie möglich sein soll und bei dem auch bei kleineren Kollisionen eine Kontaminierung der vom Deltaroboter zu bewegenden Gegenstände oder Produkte durch Partikel, die sich vom Roboter lösen, ausgeschlossen ist.

Als Lösung lehrt die Erfindung, dass bei einem Deltaroboter gemäβ dem Oberbegriff des Anspruchs 1 die Unterarme je ein Edelstahlrohr aufweisen, dessen Innenraum mittels des Kugelkopfes oder der Kugelpfanne an beiden Enden des Edelstahlrohres wasserdicht verschlossen ist und das plastisch verformbar ist.

Ein ganz wesentliches Merkmal der Erfindung ist also, dass insbesondere die Unterarme aus einem Edelstahlrohr bestehen. Dieser Gedanke mag einem Laien zunächst als trivial erscheinen, bedeutet er in der Praxis doch scheinbar nichts anderes, als ein Rohr aus CFK durch ein Rohr aus Stahl zu ersetzen.

Das ist zwar auch durchaus möglich, aber für sich alleine mit derart gravierenden Nachteilen behaftet, dass dem Fachmann diese Idee im ersten Ansatz vollkommen ferne liegt: Wie zuvor im Stand der Technik erläutert worden ist, beträgt des spezifische Gewicht von Stahl und Eisen rund 7,8 g/cm³ und damit etwa das dreifache der Dichte von CFK mit nur 1,5 g/cm³.

Dieser an sich schon sehr deutlicher Unterschied wird weiter verstärkt durch die Zugfestigkeit des Materials: bei CFK ist ein typischer Grenzwert für die Zugfestigkeit 1500 N/mm² gegenüber Stahl mit nur 1000 N/mm². Da im vorliegenden Fall beide Größen von Bedeutung sind, wird als Vergleichsmaßstab der Quotient dieser beiden Werte gebildet, also die Zugfestigkeit in Abhängigkeit von der spezifischen Dichte. Dieser Vergleichswert beträgt für CFK 1000 und für Stahl nur 128. CFK ist also rund 8-mal "besser" geeignet als Stahl.

Der Vergleich der Werkstoffeigenschaften verbietet also dem Fachmann, CFK durch Stahl zu ersetzen, da der alleinige Wechsel des Werkstoffes bei ansonsten unveränderter Konstruktion durch die Gewichtszunahme einen schwerwiegenden Nachteile ergibt und daher dem Fachmann ferne liegt.

Wenn es trotzdem zum Kernmerkmal der Erfindung wird, einen Stahlwerkstoffe einzusetzen, dann nur deshalb weil der Fachmann Zusammenhänge gefunden hat, die in ganz anderen Bereichen liegen und die den scheinbar trivialen Wechsel zu einem Stahlwerkstoff aus ganz anderen Gründen nach sich ziehen.

Dieser Zusammenhang ist die erhöhte hygienische Anforderung, die nahezu völlige Keimfreiheit fordert. Verschiedene Affären um vorsätzlich oder fahrlässig von Keimen befallene und dadurch für den Menschen höchst gefährliche Lebensmittel haben jedermann verdeutlicht, welch hohe Verantwortung und folglich auch großes Risiko eine Massenherstellung von Lebensmitteln einschließt. Deshalb ist es nachvollziehbar, dass ein erhöhter Aufwand für die gründliche Beseitigung aller Keime getrieben werden muss. Von daher ist es nachvollziehbar, dass alle auf den Oberflächen haftenden Rückstände mit erhöhter Sorgfalt zu entfernen sind. Es leuchtet ein, dass mechanische Wirkung dafür nicht ausreicht, sondern chemische Wirkungen hinzu zu ziehen sind, um das das nachhaltige Lösen und Entfernen aller Anlagerungen an die Oberfläche sicher zu stellen. Daraus folgt, dass die darunter zurückbleibende Oberfläche chemisch neutral und hoch ständig sein muss.

Es ist allgemein verbreiteter Wissenstand, dass diese Anforderungen nur von den Werkstoffen Glas und Edelstahl erfüllt werden. Ohne weiteres nachvollziehbar ist, dass Glas für den Unterarm eines Roboters ungeeignet ist, da die Festigkeit dieses Werkstoffes bei Weitem nicht ausreicht und sein spezifisches Gewicht bei weitem zu hoch ist. Nur Edelstahl kann als Kompromiss zwischen einer befriedigenden chemischen Beständigkeit und einer befriedigenden mechanischen Belastbarkeit gewährt werden.

Der Korrosionsschutz bei Edelstahl beruht auf der Bildung einer dünnen Chromoxidschicht, indem der Sauerstoff der Luft mit dem im Edelstahl enthaltenen Chrom reagiert. Bei der Herstellung werden durch Behandlung der Oberfläche mit einer sog. Beize die Eisenund Nickel-Bestandteile zu einem großen Teil abgelöst und es entsteht nahe der Oberfläche und auf der Oberfläche eine stark mit Chrom angereicherte Zone, die durch den Kontakt zum Sauerstoff der Umgebungsluft eine Chromoxidschicht bildet.

Sollte die dünne Chromoxidschicht einmal beschädigt werden, bildet sich darunter durch den steten Zugriff auf den Sauerstoff der Luft umgehend wieder eine neue Chromoxidschicht. Die Schicht ist viel dünner als eine z.B. durch Galvanisieren aufgetragene Chromschicht und haftet durch die innige Verbindung der Chromteilchen mit den anderen Metallen der Legierung viel besser.

Diese Vorteile bei der Korrosionsfestigkeit verbindet Edelstahl mit den Eigenschaften von Stahl in Bezug auf Festigkeit, Elastizität und Plastizität. Mit Stahl ist jedoch keine so hohe Festigkeit erreichbar wie mit CFK. Nur die Elastizität und Plastizität ist höher.

Wenn also im Interesse optimaler hygienischer Eigenschaften Edelstahl als Werkstoff für die Unterarme hinzunehmen ist, so ist es die Aufgabe der Erfindung, das daraus resultierende Mehrgewicht gegenüber einem gleichermaßen belastbaren Rohr aus CFK durch andere Maßnahmen zu kompensieren.

Dabei ist zu beachten, dass die erhöhnten, hygienischen Anforderungen zusätzlich bedingen, dass alle Hohlräume, in denen sich Keime einnisten und dort relativ ungestört wuchern könnten, gründlich zu verschließen sind.

Für den wasserdichten Verschluss eines CFK-Rohres ist auf aktuellem Stand der Technik grundsätzlich das Einkleben eines abschließenden Elementes erforderlich. Der dafür benötigte Klebstoff ist stets eine Schwachstelle, da er von den aggressiven Reinigungsmitteln schneller angegriffen und abgebaut wird als die übrigen Bereiche, was zu einem Versagen der Verbindung führen kann.

Im Vergleich zu Edelstahl kann jedoch auch das CFK selber dem Stahl bei der Beständigkeit gegenüber Reinigungsmitteln, z.B. mit hohem Säureanteil, unterlegen sein, da einige Typen von Kunststoffen, welche die Karbonfasern miteinander verkleben, durch die Reinigungsmittel ebenfalls stark angegriffen werden können. Das kann dazu führen, dass der Kunststoff versprödet und Risse bekommt, so dass bei starken Beschleunigungen oder ansonsten folgenlosen, kleinen Kollisionen Bruchstücke aus den Kunststoffschichten herabfallen und z. B. in Lebensmittelverpackungen stürzen können. In Folge werden die Karbonfasern freigelegt und sind bei weiteren, kleinen Kollisionen - z. B. mit unbeabsichtigt aufgeklappten Deckeln einer Kartonage - ungeschützt dem Stoß ausgesetzt.

Wie zuvor erläutert, ist es ein prinzipbedingter Nachteil von Karbonfasern, dass sie bei Überlastung praktisch keine elastische Verformung zulassen, sondern splittern, wobei Bruchstücke und Stäube frei werden.

Der Nachweis dieser äußerst unerwünschten Partikeln in Lebensmitteln ist sehr schwierig, da sie nicht so einfach wie z. B. Metallspäne durch Metalldetektoren erfassbar sind. Ein weiteres Problem ist, dass die aus einem CFK-Rohr heraus gebrochenen Partikel so klein sein können, dass die dadurch entstandene Beschädigung der Oberfläche des Rohrs bei einer optischen Kontrolle übersehen werden kann, das Bruchstück aber sehr wohl Schaden anrichtet.

Um diesen höchst nachteiligen Effekt zu vermeiden, muss der Werkstoff für den Unterarm plastisch verformbar sein. Es muss also eine Edelstahlsorte gewählt werden, die nicht so spröde ist, dass bei einem Stoß Partikel abplatzen können. Damit wird der Aufgabenstellung mit der Forderung nach möglichst geringen Folgen von Kollisionen entsprochen.

Ein dazu entgegen gerichtetes Kriterium bei der Wahl der Edelstahlsorte ergibt sich aus der Forderung der Aufgabenstellung nach höchster Dynamik. Dafür muss das Gewicht besonders gering sein, aber die Festigkeit möglichst hoch, wofür ein besonders fester und damit auch besonders spröder Stahl am besten geeignet ist.

Anders als bei der ausschließlichen Optimierung des Werkstoffs nur für eine möglichst hohe Dynamik, bedingt also die zusätzliche Forderung nach Verminderung der Folgen einer Kollision einen Kompromiss bei der Wahl der Edelstahlsorte.

Wie bereits mehrfach erwähnt, bedingt eine nahezu keimfreie Oberfläche des Unterarms, dass alle Hohl- und Innenräume wasserdicht verschlossen sind, damit sich dort keine Keime einnisten, in relativem Schutz weiter wuchern und später womöglich in Massen austreten können.

Auf aktuellem Stand der Technik ist mit dem Werkstoff Edelstahl eine solche Dichtungswirkung gegen Wasser sicher erzielbar, wie zahlreiche Tanks bei der Herstellung von Getränken vielfach beweisen. Dabei ist eine besonders effiziente Art der Verbindung von zwei Teilen aus Edelstahl, dass sie miteinander verschweißt werden, weshalb die Erfindung vorschlägt, dass in einer Ausführungsvariante eine Stirnseite des Edelstahlrohres mit einem Kugelkopf oder einer Kugelpfanne verschweißt wird. Auf diese Weise kann zuverlässig sichergestellt werden, dass keine Flüssigkeit in den Innenraum des Unterarmes eindringt.

In einer weiter verfeinerten Ausführungsvariante kann diese Schweißnaht nicht nur eine Wasserdichtigkeit gewährleisten, sondern auch alle Zugkräfte von der Kugelpfanne bzw. von einem Kugelkopf in das Rohr weiter führen. Dazu muss sich die Schweißnaht über die gesamte Stirnfläche des Edelstahlrohres erstrecken. Selbstverständlich ist auch, dass die Schweißnaht selber dann eine ebensolche Festigkeit wie das Edelstahlrohr aufweist.

Der entscheidende Vorteil dabei ist, dass an der Verbindungsstelle - abweichend vom aktuellen Stand der Technik - das ansonsten parallel zum Rohr des Unterarms geführte, zweite Rohrstück an der Kugelpfanne oder am Kugelkopf entfällt und somit das Gewicht deutlich reduziert wird.

Der relativ gewichtige Rohransatz, der den Unterarm an seinem Ende umfasst oder der in das Ende des Unterarmes hinein gesteckt wird entfällt dann. In vielen Fällen kann dadurch das Mehrgewicht des Stahlrohres gegenüber dem CFK Rohr bereits kompensiert werden. Dieser Rohransatz ist nämlich für die Verbindung eines CFK Rohres mit einem Kugelkopf oder einer Kugelpfanne aus Metall ein ebenso unverzichtbares wie gewichtiges Element:

Ebenso wie die Karbonfasern untereinander durch Einbettung in eine Kunststoffschicht miteinander verklebt werden, so müssen sie auch mit dem nächsten, anschließenden Bauelement verklebt werden. Damit auch bei Zugbelastung alle Kräfte übertragen werden, ist dafür eine Mindestfläche erforderlich. Auf aktuellem Stand der Kunststoffe ist diese Fläche bei weitem größer als der Querschnitt durch das CFK-Rohr. Deshalb ist die Verklebung nur an der Innenwand oder der Außenwand des Rohres möglich. Daraus folgt, dass über diejenige Länge hinweg, die von einer sicheren Verklebung bestimmt wird, zwei Rohre parallel führen.

Da es in der Praxis nicht möglich ist, mit vertretbarem Aufwand sämtliche Teile der sich berührenden Flächen mit Klebstoff zu beschichten und eine innige Verbindung zwischen beiden Flächen herzustellen, muss ein Sicherheitszuschlag für die Fläche hinzugefügt werden, der für eine weitere Vergrößerung des Gewichtes verantwortlich ist.

Die Verschweißung ist also der Verklebung durch den Wegfall des zweiten Rohres an der Verbindungsstelle bei der Erfindung deutlich überlegen. Da die Schweißnaht perfekt geschlossen und durchge- hend sein sollte, ist es in konsequenter Nutzung dieses Prinzips eine vorteilhafte Variante, wenn vom Kugelkopf oder der Kugelpfanne nur ein Zentrierabsatz oder sogar nur drei Führungsnasen in das Edelstahlrohr hineinragen oder es umfassen, weil dadurch das einwandfreie Zentrieren des Rohres mit dem Kugelkopf oder der Kugelpfanne sehr vereinfacht wird, aber das Gewicht des Kugelkopfes oder der Kugelpfanne kaum erhöht wird.

In einer anderen Ausführungsform ist es auch denkbar, ein Edelstahlrohr mit dem Kugelkopf bzw. mit der Kugelpfanne durch eine Lötung oder eine Klebung oder eine Verschrumpfung zu verbinden. Dabei wird stets ein Teil des Kugelkopfes oder der Kugelpfanne teleskopisch in das Edelstahlrohr eingesteckt oder umfasst es von außen. Je nach der Qualität der gewählten Verbindungsmethode kann es dabei unter Umständen erforderlich werden, noch einen zusätzlichen Dichtungsring zwischen die beiden Elemente einzuschieben.

Weil dabei jedoch das Gewicht des Unterarmes deutlich ansteigt, was die Dynamik des Delta-Roboters in erstaunlichem Maße verschlechtert, liegt diese unattraktive Variante dem Fachmann fern.

Als eine weitere Variante für eine weitere Reduzierung des Gewichtes ist es möglich, dass die Außenfläche des Edelstahlrohres glatt gestaltet wird - was im Interesse einer optimalen Reinigungsfähigkeit zu bevorzugen ist - und an die Innenfläche mehrere Rippen angeformt werden, die in Längsrichtung verlaufen und radial ausgerichtet sind. Dadurch wird bei gleichbleibendem Gesamtgewicht die Knickfestigkeit des Rohres erhöht und damit die mögliche Druckbelastung gesteigert. Da der Innenraum des Rohres nach außen hin wasserdicht abgeschlossen ist, sind Hinterschneidungen und Kerben im Innenraum problemlos möglich, die an der Außenfläche eines hygienisch optimierten Roboters äußert unwillkommen sind, da sich Rückstände in den Ecken festsetzen können und sich dort den Reinigungsaufwendungen entziehen können.

Alternativ zu den Rippen oder in Ergänzung dazu können andere, leichtgewichtige, aber mittragende Elemente, wie z. B. ein CFK Rohr oder Metallschaum oder ein Bündel schlanker Rohre in das Innere des Edelstahlrohres für den Unterarm eingebracht werden.

Zur hygienisch optimalen Gestaltung eines Deltaroboters zählt es auch, dass die Außenfläche des Gehäuses ebenso wie die Außenfläche der Kugelpfannen und der Kugelköpfe aus Edelstahl geformt sind. Auch die Oberarme sind konsequenterweise aus Edelstahl, zumindest an der Oberfläche.

Dabei ist es durchaus sinnvoll, auch für die Oberarme Edelstahlrohre einzusetzen. Da sie im Gegensatz zu den Unterarmen nicht nur Druck- und Zugkräften ausgesetzt sind, sondern vor allem erheblichen Biegemomenten, sind ihre Querschnitte und Wandstärken jedoch erheblich größer als bei den Unterarmen. Der Einfluss dieser Massen auf die Trägheit ist jedoch um Größenordnungen geringer als die der Unterarme, da bekanntlich das wirksame Lastträgheitsmoment mit der vierten Potenz des Bewegungsradius zunimmt.

Zur weiteren Gewichtserleichterung wird vorgeschlagen, wenigstens einen Kugelkopf als Hohlkörper herzustellen. Um dennoch eine ausreichende Festigkeit zu erzielen, können an die Innenfläche des hohlen Kugelkopfes mehre, radial ausgerichtete Rippen angeformt werden. Denkbar ist auch jede andere, leichtgewichtige, aber in sich steife Struktur, wie z. B. Metallschaum.

Auf aktuellem Stand der Technik ist die Kugelpfanne ein Teil einer Hohlkugel, die den Kugelkopf mit einem Winkel von bis zu 180 Grad umfasst. Als alternative Ausführungsform schlägt die Erfindung vor, dass die Kugelpfanne zwei Öffnungen aufweist, also nicht nur eine große, mit der sie auf dem Kugelkopf aufgesetzt wird, sondern auch eine zweite, kleinere, die konstruktiv durch das "Abschneiden" des kugelkopfartigen Teils der Kugelpfanne entsteht. Es bleibt ein ringförmiges Element, das jedoch den Vorteil hat, dass die Punkte größter Belastung auch bei höchster Beschleunigung des Deltaroboters nur über einen sehr kleinen Bereich des Kugelkopfes hinweg verschoben werden. Der tatsächliche Mittelpunkt der Zug- und Druckkräfte ist also auf einen sehr viel kleineren Bereich eingegrenzt, als bei einer bekannten Kugelpfanne mit nur einer einzigen Öffnung.

Deshalb ist diese Variante der Kugelpfanne besonders sinnvoll mit der im Folgenden geschilderten Variante der Verbindung von Kugelkopf bzw. Kugelpfanne und dem Rohr des Unterarmes kombinierbar: Wenn der Kugelmittelpunkt des Kugelkopfes oder der Kugelpfanne gegenüber der Mittelachse des Rohres so weit in radialer Richtung versetzt ist, dass die vom Kugelkopf oder der Kugelpfanne ausgeübte, resultierende Kraft entlang der Mittelachse des Rohres verläuft, verteilen sich die ausgeübten Kräfte weitaus gleichmäßiger über das Rohr als wie bei der bisher üblichen Anordnung, wie sie auch im hier zitierten Stand der Technik geschildert wird, bei der der geometrische Mittelpunkt des Kugelgelenkes in der Mittelachse des Rohres angeordnet ist. Dann greifen nämlich die resultierenden Kräfte aus Kugelpfanne oder Kugelkopf außerhalb der Mittelachse an, was eine entsprechende Verstärkung und damit Gewichtserhöhung des Rohres nach sich zieht.

Die Erfindung bevorzugt, dass die Kugelpfanne den Kugelkopf bezogen auf den Kugelmittelpunkt mit einem Winkel von 180 Grad umfasst, weil in dieser Ausführungsvariante die quer zum Unterarm wirkenden Kräfte am kleinsten sind.

Ebenfalls bevorzugt wird, dass in die Innenfläche einer Kugelpfanne eine elastisch und sehr gleitfähige Kunststoffschicht eingebracht wird. Zwar ist diese bei erhöhten hygienischen Anforderungen dem erhöhten Verschleiß durch die Reinigungsmittel ausgesetzt und muss deshalb in regelmäßigen Abständen gewechselt werden. Aber dieser Wechsel ist ein relativ geringer Aufwand im Vergleich zu dem sehr deutlichen Gewinn in der Gleitfähigkeit von Kugelpfanne und Kugelkopf und der dadurch geringeren Belastung der Arme des Roboters, was letztendlich eine schlankere Dimensionierung und eine deutlich erhöhte Dynamik des Deltaroboters ergibt.

Wenn diese Kunststoffschicht als ein separat in die Pfanne einzurastender Einsatz montiert wird, ist ihr Wechsel auch schnell und kostengünstig durchführbar.

Das statisch optimale Profil eines Unterarmes ist ein Rohr mit einem kreisförmigen Querschnitt. Als Querschnitt ist jedoch auch ein Oval, eine Ellipse, ein Rechteck oder ein Polygon möglich.

Als Antrieb für einen erfindungsgemäßen Deltaroboter kann ein rotierender Servomotor oder ein Linearmotor eingesetzt werden. Möglich ist auch ein Schrittmotor oder ein anderer elektrischer Antrieb. Alternativ sind Hydraulikzylinder oder Pneumatikzylinder oder ein Piezokristall anwendbar.

Im Folgenden sollen weitere Einzelheiten und Merkmale der Erfindung anhand von zwei Beispielen näher erläutert werden. Diese sollen die Erfindung jedoch nicht einschränken, sondern nur erläutern.

Es zeigt in schematischer Darstellung:
- Figur 1: Perspektivische Darstellung eines Deltaroboters
- Figur 2: Schnitt durch ein großes Kugelgelenk mit angeschweißtem Edelstahlrohr
- Figur 3 a: Schnitt durch ein kleines Kugelgelenk mit angeschweißtem Edelstahlrohr

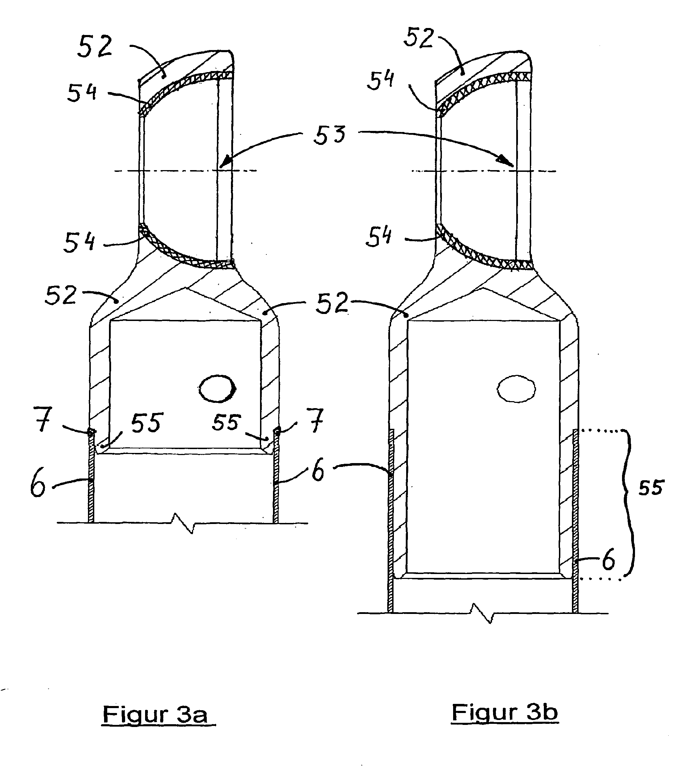

- Figur 3 b: Schnitt durch ein kleines Kugelgelenk mit verklebtem Edelstahlrohr

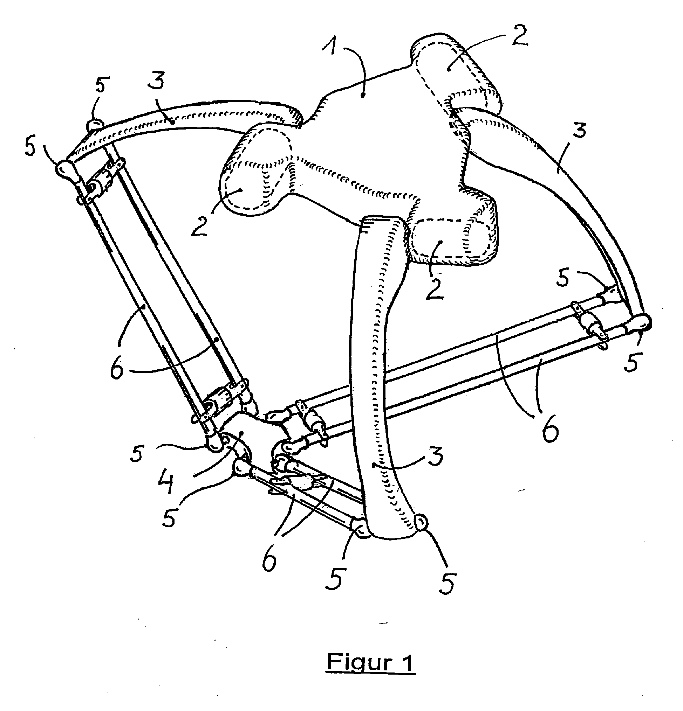

In **Figur 1** ist das prinzipielle Schema eines erfindungsgemäßen Deltaroboters gezeichnet. Im oberen Teil der Zeichnung ist das Gehäuse 1 zu sehen, in dem in diesem Ausführungsbeispiel drei Antriebe 2 eingebaut sind. Sie sind durch das Gehäuse 1 vollständig von der Außenwelt abgekapselt. Nur ihre Abtriebswellen ragen heraus und bewegen je einen Oberarm 3 wie eine Kurbel. An den freien Enden jedes Oberarmes 3 ist über Kugelgelenke 5 jeweils ein Paar der Edelstahlrohre 6 angelenkt. Ebenfalls über Kugelgelenke 5 sind diese Paare von Edelstahlrohren 6 mit der Parallelplatte 4 verbunden. Jedes Paar der Edelstahlrohre 6 wird am oberen sowie am unteren Ende durch je ein dauerhaft elastisches Element zusammengehalten.

Durch die beiden zueinander parallelen Edelstahlrohre bleibt die Parallelplatte 4 stets parallel zum ortsfesten Gehäuse 1, unabhängig davon, in welche Positionen des erreichbaren Verschwenkraumes vom Deltaroboter sie bewegt wird.

An der Parallelplatte 4 kann ein Warenaufnehmer, ein Werkzeug, ein Sensor, wie z.B. eine Kamera, oder ein anderes Objekt befestigt werden, das die eigentliche Aktivität des Deltaroboter bestimmt und von ihm in die jeweils gewünschte Position bewegt wird.

In Figur 1 ist im oberen Teil die rundliche Kantenausbildung des Gehäuses 1 erkennbar. Dadurch wird verhindert, dass sich in Winkeln und an den Kanten überproportional zahlreiche Verschmutzungen ansammeln. Dennoch angelagerte Verschmutzungen können leichter entfernt werden.

In Figur 1 wird schnell deutlich, dass für eine perfekte Beständigkeit gegen die aggressiven Reinigungsmitteln in hygienisch anspruchsvollen Räumen nicht nur die Unterarme mit ihren Edelstahlrohren 6 aus Edelstahl gefertigt sein sollten, sondern auch alle übrigen Außenflächen.

Figur 1 verdeutlicht, dass dieser Schritt jedoch für die Unterarme die größten Konsequenzen hat, da diese am weitesten von dem ortsfesten Gehäuse 1 entfernt sind, das das feste Zentrum der Bewegung ist. Ausgehend davon, dass das Massenträgheitsmoment eines Körpers direkt proportional zu seiner Masse und proportional zum Quadrat des Abstandes vom Mittelpunkt der rotatorischen Bewegung ist, soll zur Erläuterung dieses Verhältnisses derjenige Zustand genommen werden, in dem sich der Schwerpunkt der Unterarme etwa doppelt so weit vom Bezugspunkt der Schwenkbewegung - nämlich der Mitte des Gehäuses 1 - entfernt ist wie der Schwerpunkt der Oberarme 3. Bei der Annahme einer gleichen Masse sowohl für die Unterarme 6 als auch für die Oberarme 3 beträgt das effektive Massenträgheitsmoment der Unterarme 6 das 4-fache der Oberarme 3. Diese Betrachtung der Figur 1 verdeutlicht, dass das Gewicht der Unterarme 6 von entscheidendem Einfluss auf die Dynamik des gesamten Roboters ist.

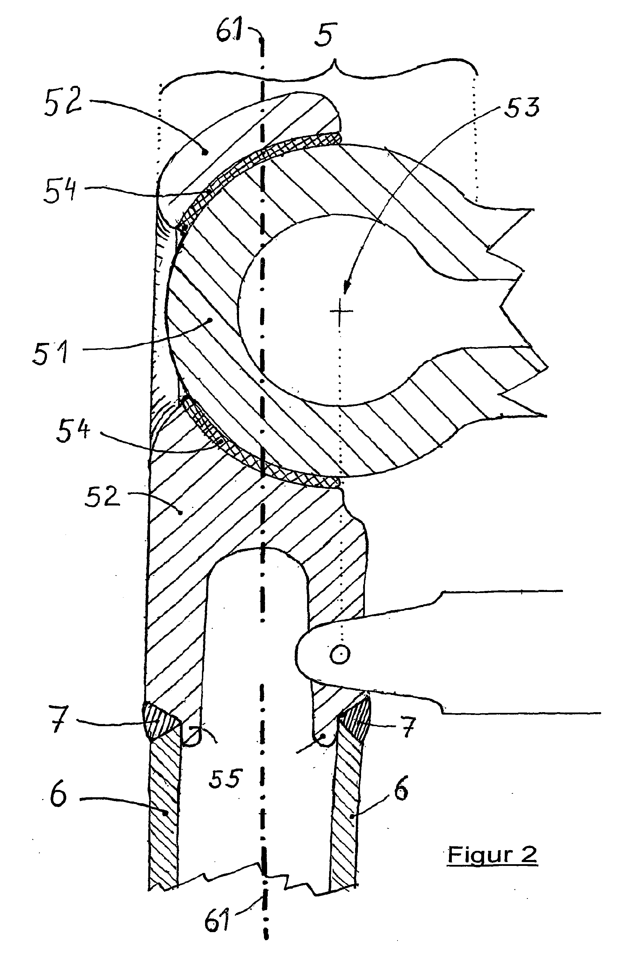

In **Figur 2** ist ein Schnitt durch ein Kugelgelenk 5 wiedergegeben, das im Verhältnis zum Edelstahlrohr 6 relativ groß ist. Den Kugelkopf 51 umschließt die Kugelpfanne 52 mit einem Umfassungswinkel von ca. 180°, wobei eine Kunststoffschicht 54 beide Elemente voneinander trennt und die Haft- und Gleitreibungskoeffizienten zwischen Hohlkugel und Kugelsegment erheblich verbessert.

Der Kugelkopf 51 ist an einem - hier nicht gezeichneten - Oberarm 3 oder an der - hier ebenfalls nicht gezeichneten - Parallelplatte 4 befestigt.

Die in Figur 2 gezeigte Variante der Kugelpfanne 52 ist mit zwei Öffnungen versehen, die in der hier gezeigten Ausführungsform etwa parallel zueinander angeordnet sind. Dadurch umschließt die Kugelpfanne 52 den Kugelkopf 51 nicht mehr vollständig auf einer Hälfte, sondern nur noch auf einer ringförmig um die Kugel herum verlaufenden Fläche. Der Vorteil dieser Anordnung ist in Figur 2 deutlich zu erkennen: Bei schnellen Änderungen der Zug- oder Druckkräfte parallel zur Mittelachse des Edelstahlrohres 6 werden die Anteile der Kräfte, die quer zur Mittelachse 61 ausgerichtet sind umso kleiner, je größer die links gezeichnete Öffnung der Kugelpfanne 52 ist.

Figur 2 zeigt noch eine weitere vorteilhafte Ausführungsform. Abweichend vom bisherigen Stand der Technik verläuft die Mittelachse 61 des Edelstahlrohres 6 nicht durch den rotatorischen Mittelpunkt 53 des Kugelgelenkes 5 sondern außerhalb davon. In Figur 2 ist gut nachvollziehbar, dass der Summenvektor aller in Längsrichtung des - Edelstahlrohres 6 wirkenden Kräfte entlang der Mittellinie 61 des Rohres verläuft. Dadurch werden die Kräfte gleichmäßig auf alle Bereiche der Wandung des Rohres 61 verteilt, sodass eine geringere Wandstärke gewählt werden kann, was dessen Gewicht vermindert.

Figur 2 zeigt auch, dass das elastische Element, wie z. B. eine Feder, das mit seinem Gehäuse rechts unten eingezeichnet ist und das die beiden parallel laufenden Edelstahlrohre 6 mittels ihrer Kugelpfanne 52 auf jeweils einen Kugelkopf 51 drückt, nicht auf der Mittellinie des Edelstrahlrohres 6 angelenkt ist, sondern auf einer Linie, die durch die rotatorische Mitte 53 eines Kugelgelenkes 5 verläuft. Damit werden unnötige Ausdehnungen und Stauchungen der Feder vermieden, was einen Verzicht auf dafür erforderliche Reserven in der Dimensionierung der Wandstärke des Edelstahlrohres 6 erlaubt.

Bei der in Figur 2 gezeigten Ausführungsform ist das Edelstahlrohr 6 über eine Schweißnaht 7 an seiner Stirnseite mit dem rohrförmigen Fortsatz der Kugelpfanne 52 verbunden. In Figur 2 ist sehr gut zu erkennen, dass in das Edelstahlrohr 6 nur ein kurzer Zentrierabsatz 55 hineinragt, der lediglich so lang ist, dass er während des Erstellens der Schweißnaht eine einwandfreie Zentrierung der beiden zu verbindenden Elemente sicherstellt.

In **Figur 3a und Figur 3b** ist dieser Zusammenhang durch zwei verschiedene Ausführungen des Zentrierabsatzes 55 nochmals verdeutlicht: In Figur 3 ist eine prinzipiell ähnliche Anordnung wie in Figur 2 im Schnitt wiedergegeben, jedoch mit einem kleineren Durchmesser des Kugelgelenkes im Verhältnis zum Durchmesser des Edelstahlrohres 6. In der links gezeichneten Figur 3 a ist der Zentrierabsatz 55 - ebenso wie in Figur 2 - nur mit einer sehr kurzen Länge teleskopisch in das Edelstahlrohr hinein geführt, die erheblich kleiner als der Radius des Edelstahlrohres 6 ist. Ein derart kurzer Zentrierabsatz 55 dient nur zur Fixierung des Edelstahlrohres 6 während der Erstellung der Schweißnaht 7, die das Edelstrahlrohr 6 mit der Kugelpfanne 52 verbindet.

In der rechts gezeichneten Figur 3b ist die ansonsten gleiche Kugelpfanne im Bereich ihres Zentrierabsatzes 55 dramatisch verlängert und ragt mit ihrem Zentrierabsatz 55 auf einer Länge in das Edelstahlrohr hinein, die etwa dessen Durchmesser entspricht. Der entscheidende Vorteil dieser Konfiguration ist, dass dadurch die Berührungsfläche zwischen dem Rohrstutzen an der Kugelpfanne 52 und der Seitenfläche des Edelstahlrohres 6 deutlich vergrößert wird. Diese große Fläche wird für eine Klebstoffschicht genutzt, die das Edelstahlrohr oder ein anderes Rohr mit dem Rohrstutzen an der Kugelpfanne verbindet. Es ist ohne weiteres nachvollziehbar, dass mit einer Vergrößerung der Klebefläche auch die Belastbarkeit dieser Verbindung direkt proportional gestärkt wird.

In Figur 3b ist aber auch der ganz entscheidende Nachteil dieser Konfiguration sehr deutlich zu erkennen, nämlich die verdoppelte Länge des Rohrstutzens an der Kugelpfanne 52. Aus Figur 3b ist durch den Vergleich mit der nebenstehenden Figur 3 a sehr leicht zu erschließen, welch massiver Zuwachs an Gewicht im Verhältnis zur geschweißten Verbindung damit erzeugt wird.

Eine derartige Verbindung ist der bisherige Stand der Technik für die Verklebung von CFK-Rohren mit der Kugelpfanne 52. Deshalb entspricht die Figur 3b mit ihrer Klebeverbindung dem aktuellen Stand der Technik, bei dem anstelle eines Edelstahlrohres 6 ein Rohr aus CFK aufgesteckt und verklebt wird. Der Vergleich zu der Figur 3 a mit der erfindungsgemäßen Anbringung eines Edelstahlrohres an den Rohrstutzen eines Kugelgelenkes durch eine Schweißnaht 7 zeigt, dass dafür nur ein dramatisch verkürzter Zentrierabsatz 55 oder sogar nur wenige Zentriernasen erforderlich sind, was eine entsprechend hohe Reduzierung des Gewichtes der Kugelpfanne ermöglicht.

In dem hier gezeigten Beispiel wird also deutlich, dass das Mehrgewicht des stählernen Unterarmes - des Edelstahlrohres 6 - durch das konstruktiv erreichte Mindergewicht des verkürzten Zentrierabsatzes 55 kompensiert werden kann.

### Bezugszeichenliste

- 1: Gehäuse
- 2: Antriebe, wenigstens drei Stück in Gehäuse 1
- 3: Oberarm, an Gehäuse 1 angelenkt und mit einem Antrieb 2 verbunden
- 4: Parallelplatte, an Stangen 32
- 5: Kugelgelenk an den Stangen 32
- 51: Kugelkopf , Teil des Kugelgelenks 5
- 52: Kugelpfanne, komplementär zum Kugelkopf 51
- 53: rotatorische Mitte eines Kugelgelenkes 5
- 54: Kunststoffschicht, zwischen Kugelkopf 51 und Kugelpfanne 52
- 55: Zentrierabsatz oder Zentriernase, zur Zentrierung des Kugelgelenks 5 im Edelstahlrohr 6
- 6: Edelstahlrohr als Unterarm, über je ein Kugelgelenk 5 auf einer Seite mit dem Oberarm 3 und auf der anderen Seite mit der Pasallelplatte 4 verbunden.
- 61: Mittelachse eines Edelstahlrohres 6
- 7: Schweißnaht, verbindet eine Stirnseite des Edelstahlrohres 6 mit einem Kugelkopf 51 oder einer Kugelpfanne 52

## Patentansprüche

1. Deltaroboter für erhöhte Anforderungen an Dynamik, Hygiene und Kollisionsfolgenschutz, bestehend aus
- einem ortsfesten Gehäuse (1), in dem
- wenigstens drei Antriebe (2) eingebaut sind und
- an dem wenigstens drei längliche Oberarme (3)
- jeweils um eine Achse verschwenkbar angelenkt sind und
- mit je einem der Antriebe (2) verbunden sind und
- an ihrem freien Ende mit je einem Paar länglicher und zueinander parallelen Unterarmen über je ein Kugelgelenk (5) verbunden sind, die an ihrem anderen Ende jeweils über ein weiteres Kugelgelenk (5) mit
- einer bewegbaren Parallelplatte (4) verbunden sind, wobei
- an beiden Enden jedes Unterarmes ein Kugelkopf (51) oder eine Kugelpfanne (52) als Teil eines Kugelgelenks (5) befestigt ist,
**dadurch gekennzeichnet, dass**
die Unterarme je ein Edelstahlrohr (6) aufweisen,
- dessen Innenraum mittels des Kugelkopfes (51) oder der Kugelpfanne (52) an beiden Enden des Edelstahlrohres (6) wasserdicht verschlossen ist und
- das plastisch verformbar ist.

2. Deltaroboter nach Anspruch 1, **dadurch gekennzeichnet, dass** der Kugelkopf (51) oder die Kugelpfanne(52)mit einer Stirnseite des Edelstahlrohres (6) durch eine Schweißnaht (7) verbunden ist.

3. Deltaroboter nach Anspruch 2,
**dadurch gekennzeichnet, dass** sich die Schweißnaht (7) über die gesamte Stirnfläche des Edelstahlrohres (6) erstreckt.

4. Deltaroboter nach Anspruch 3, **dadurch gekennzeichnet, dass** vom Kugelkopf (51) oder der Kugelpfanne (52)
- nur ein Zentrierabsatz oder
- nur drei Führungsnasen
in das Edelstahlrohr (6) hineinragen oder es umfassen.

5. Deltaroboter nach Anspruch 4, **dadurch gekennzeichnet, dass** der Kugelmittelpunkt des Kugelköpfes (51) oder der Kugelpfanne (52) gegenüber der Mittelachse (61) des Rohres (6) soweit in radialer Richtung versetzt sind, dass die vom Kugelkopf (51) oder der Kugelpfanne (52) ausgeübte, resultierende Kraft entlang der Mittelachse (61)verläuft.

6. Deltaroboter nach einem der vorhergehenden Ansprüche, **dadurch gekennzeichnet, dass** der Kugelkopf (51) oder die Kugelpfanne (52) mit dem Edelstahlrohr (6) durch
- eine Lötung oder
- eine Klebung oder
- eine Verschrumpfung
verbunden ist.

7. Deltaroboter nach Anspruch 6, **dadurch gekennzeichnet, dass** ein Teil des Kugelkopfes (51) oder der Kugelpfanne (52) teleskopisch - in das Edelstahlrohr (6) eingesteckt ist oder es von außen umfasst.

8. Deltaroboter nach einem der vorhergehenden Ansprüche, **dadurch gekennzeichnet, dass** die Außenfläche des Ödelstahlrohres (6) glatt ist und an die Innenfläche mehrere Rippen angeformt sind, die in Längsrichtung verlaufen und radial ausgerichtet sind.

9. Deltaroboter nach einem der vorhergehenden Ansprüche,
**dadurch gekennzeichnet, dass** das Innere des Edelstahlrohres (6) weitere, mit tragende Elemente, wie z.B. ein CFK-Rohr, enthält.

10. Deltaroboter nach einem der vorhergehenden Ansprüche, **dadurch gekennzeichnet, dass** wenigstens ein Kugelkopf (51) innen hohl ist.

11. Deltaroboter nach einem der vorhergehenden Ansprüche,
**dadurch gekennzeichnet, dass**
an die Innenfläche des Kugelkopfes (51) mehrere, radial ausgerichtete Rippen angeformt sind.

12. Deltaroboter nach einem der vorhergehenden Ansprüche,
**dadurch gekennzeichnet, dass**
eine Kugelpfanne (52) zwei Öffnungen aufweist und den Kugelkopf (51) etwa ringförmig umfasst.

13. Deltaroboter nach einem der vorhergehenden Ansprüche,
**dadurch gekennzeichnet, dass**
die Kugelpfanne (52) den Kugelkopf (51) bezogen auf den Kugelmittelpunkt (53) mit einem Winkel von etwa 180° umfasst.

14. Deltaroboter nach einem der vorhergehenden Ansprüche,
**dadurch gekennzeichnet, dass**
in die Innenfläche einer Kugelpfanne (52) eine elastische und sehr gleitfähige Kunststoffschicht (54) eingebracht ist.

15. Deltaroboter nach Anspruch 14
**dadurch gekennzeichnet, dass**
die Kunststoffschicht (54) als Kunststoffeinsatz in die Kugelpfanne (52) montiert wird.

16. Deltaroboter nach einem der vorhergehenden Ansprüche,
**dadurch gekennzeichnet, dass** das Profil des Edelstahlrohres (6)
- ein Kreis oder
- ein Oval oder
- eine Ellipse oder
- ein Rechteck
ist

17. Deltaroboter nach einem der vorhergehenden Ansprüche, **dadurch gekennzeichnet, dass** der Antrieb (2) ein rotierender Servomotor oder ein Linearmotor oder ein Schrittmotor oder ein anderer elektrischer Antrieb oder ein Hydraulikzylinder oder ein Pneumatikzylinder oder ein Piezokristall ist.

## Claims

1. Delta robot for increased requirements on dynamics, hygiene and protection against the consequences of collision, comprising
- a stationary housing (1), in which
- at least three drives (2) are installed, and
- on which at least three elongate upper arms (3)
- are in each case mounted so as to be pivotable about an axle and
- are connected to one of the drives (2) in each case and
- are connected, at their free ends, to one pair of elongate and mutually parallel lower arms via one ball joint (5) in each case, which at their other end are in each case connected via a further ball joint (5) to
- a movable parallel plate (4),
- a ball head (51) or a ball socket (52) being attached at both ends of
each lower arm as part of a ball joint (5),
**characterised in that**
the lower arms comprise in each case a stainless steel tube (6),
- the inner space of which is sealed in a watertight manner, by means of a ball head (51) or a ball socket (52) at both ends of the stainless steel tube (6), and
- which is plastically deformable.

2. Delta robot according to claim 1, **characterised in that** the ball head (51) or the ball socket (52) is connected to an end face of the stainless steel tube (6) via a weld seam (7).

3. Delta robot according to claim 2
**characterised in that** the weld seam (7) extends over the entire end face of the stainless steel tube (6).

4. Delta robot according to claim 3, **characterised in that**, from the ball head (51) or the ball socket (52),
- only a centring spigot or
- only three guide lugs
project into or enclose the stainless steel tube (6).

5. Delta robot according to claim 4, **characterised in that** the ball centre point of the ball head (51) or of the ball socket (52) is displaced with respect to the centre axis (61) of the tube (6) in the radial direction to the extent that the resulting force exerted by the ball head (51) or the ball socket (52) runs along the centre axis (61).

6. Delta robot according to one of the preceding claims, **characterised in that** the ball head (51) or ball socket (52) is connected to a stainless steel tube (6) by means of
- a soldered joint, or
- an adhesive bond or
- a shrink fit.

7. Delta robot according to claim 6 **characterized in that** part of the ball head (51) or of the ball socket (52) is telescopically inserted into the stainless steel tube (6) or encloses it externally.

8. Delta robot according to one of the preceding claims, **characterised in that** the outer surface of the stainless steel tube (6) is smooth and a plurality of ribs are integrally formed on the inner surface, which extend in the longitudinal direct and are radially oriented.

9. Delta robot according to one of the preceding claims, **characterised in that** the interior of the stainless steel tube (6) contains further co-supporting elements, for example a CRP tube.

10. Delta robot according to one of the preceding claims, **characterised in that** at least one ball head (51) is internally hollow.

11. Delta robot according to one of the preceding claims, **characterised in that** a plurality of radially oriented ribs are integrally moulded onto the inner surface of the ball head (51).

12. Delta robot according to one of the preceding claims, **characterised in that** a ball socket (52) comprises two openings and encloses the ball head (51) approximately annularly.

13. Delta robot according to one of the preceding claims, **characterised in that** the ball socket (52) encloses the ball head (51) with an angle of about 180° based on the ball centre point (53).

14. Delta robot according to one of the preceding claims, **characterised in that** an elastic and highly slippery plastic layer (54) is introduced in the interior surface of a ball socket (52).

15. Delta robot according to claim 14, **characterised in that** the plastic layer (54) is mounted in the ball socket (52) as a plastic insert.

16. Delta robot according to one of the preceding claims, **characterised in that** the profile of the stainless steel tube (6) is
- a circle or
- an oval or
- an ellipse or
- a rectangle.

17. Delta robot according to one of the preceding claims, **characterised in that** the drive (2) is a rotating servo motor or a linear motor or a stepping motor or another electric drive or a hydraulic cylinder or a pneumatic cylinder or a piezo crystal.

## Revendications

1. Robot delta destiné aux exigences accrues posées à la dynamique, à l'hygiène et à la protection contre les conséquences des collisions, consistant en
■ un boîtier (1) inamovible dans lequel sont incorporés au moins trois entraînements (2) et
■ sur lequel au moins trois bras supérieurs oblongs (3)
■ sont chacun articulé de façon à pouvoir pivoter autour d'un axe,
■ et sont chacun relié à un des entraînements (2),
■ et sont chacun reliés à leur extrémité libre à une paire de bras inférieurs oblongs et parallèles les uns aux autres par l'intermédiaire d'une articulation sphérique (5), qui sont chacun relié à leur autre extrémité, par l'intermédiaire d'une autre articulation sphérique (5) avec
■ une plaque parallèle mobile (4), sachant
■ qu'une tête sphérique (51) ou une panne sphérique (52) sont fixés en tant que partie d'une articulation sphérique (5) aux deux extrémités de chaque bras inférieur
**caractérisé par le fait que**
que les bras inférieurs présentent chacun un tube en inox (6),
■ dont l'espace intérieur est fermé, de façon étanche à l'eau, aux deux extrémités du tube en inox (6) au moyen de la tête sphérique (51) ou de la panne sphérique (52) et
■ qui peut être formé plastiquement.

2. Robot delta selon la revendication 1, **caractérisé par le fait que** la tête sphérique (51) ou la panne sphérique (52) est relié à une face du tube en inox (6) au moyen d'un cordon de soudure (7).

3. Robot delta selon la revendication 2, **caractérisé par le fait que** le cordon de soudure (7) s'étend sur l'ensemble de la surface frontale du tube en inox (6).

4. Robot delta selon la revendication 3, **caractérisé par le fait que**, de la tête sphérique (51) ou de la panne sphérique (52)
■ seul un décrochement de centrage ou
■ seuls trois nez de guidage
dépassent dans le tube inox (6) ou l'enserrent.

5. Robot delta selon la revendication 4, **caractérisé par le fait que** le point central de la sphère de la tête sphérique (51) ou de la panne sphérique (52) sont décalés dans le sens radial par rapport à l'axe médian (61) du tube (6) de façon à ce que la force résultant de la tête sphérique (51) ou de la panne sphérique (52) coure le long de l'axe médian (61).

6. Robot delta selon une des revendications précédentes, **caractérisé par le fait que** la tête sphérique (51) ou la panne sphérique (52) est relié au tube en inox par
■ un brasage ou
■ un collage ou
■ un rétrécissement.

7. Robot delta selon la revendication 6, **caractérisé par le fait qu'**une partie de la tête sphérique (51) ou de la panne sphérique (52) est insérée télescopiquement dans le tube inox (6) ou l'enserre de l'extérieur.

8. Robot delta selon une des revendications précédentes, **caractérisé par le fait que** la surface extérieure du tube en inox (6) est lisse et que plusieurs nervures sont formées sur la surface intérieure, qui courent dans le sens longitudinal et sont orientées dans le sens radial.

9. Robot delta selon une des revendications précédentes, **caractérisé par le fait que** l'intérieur du tube en inox (6) contient d'autres éléments également porteurs, comme par exemple un tuyau en stratifié de carbone.

10. Robot delta selon une des revendications précédentes, **caractérisé par le fait qu'**au moins une tête sphérique (51) est creuse à l'intérieur.

11. Robot delta selon une des revendications précédentes, **caractérisé par le fait que** plusieurs nervures orientées dans le sens radial sont formées sur la surface intérieure de la tête sphérique (51).

12. Robot delta selon une des revendications précédentes, **caractérisé par le fait qu'**une panne sphérique (52) présente deux ouvertures et enserre la tête sphérique (51) environ en anneau.

13. Robot delta selon une des revendications précédentes, **caractérisé par le fait qu'**une panne sphérique (52) enserre la tête sphérique (51) avec un angle d'environ 180° par rapport au point central de la sphère (53).

14. Robot delta selon une des revendications précédentes, **caractérisé par le fait qu'**une couche plastique élastique et très coulissante (54) est appliquée sur la surface intérieure d'une panne sphérique (52).

15. Robot delta selon la revendication 14, **caractérisé par le fait que** la couche en plastique (54) est montée en tant qu'insert en plastique dans la panne sphérique (52).

16. Robot delta selon une des revendications précédentes, **caractérisé par le fait que** le profil du tube en inox (6) est
■ un cercle ou
■ un ovale ou
■ une ellipse ou
■ un carré.

17. Robot delta selon une des revendications précédentes, **caractérisé par le fait que** l'entraînement (2) est un servomoteur en rotation ou un moteur linéaire ou un moteur pas à pas ou un autre entraînement électrique ou un vérin hydraulique ou un vérin pneumatique ou un cristal piézo.
